# EUROPÄISCHE PATENTSCHRIFT

(11) **EP 1 561 045 B1**
(45) Veröffentlichungstag und Bekanntmachung des Hinweises auf die Patenterteilung: **13.06.2007**
(21) Anmeldenummer: 03811367.6
(22) Anmeldetag: 08.11.2003
(51) Int. Cl.: F16D 25/08

(54) **EINRICHTUNG ZUR HERSTELLUNG DER BETRIEBSBEREITSCHAFT EINER HYDRAULISCHEN BETÄTIGUNGSVORRICHTUNG**
DEVICE FOR RENDERING OPERATIONAL A HYDRAULIC ACTUATING DEVICE
DISPOSITIF POUR RENDRE OPERATIONNEL UN MECANISME D'ACTIONNEMENT HYDRAULIQUE

(30) Priorität: 16.11.2002 DE 10253492
(43) Veröffentlichungstag der Anmeldung: 10.08.2005
(73) Patentinhaber: ZF FRIEDRICHSHAFEN Aktiengesellschaft, 88038 Friedrichshafen (DE)
(72) Erfinder: SCHWENGER, Andreas, 38446 Wofsburg (DE); EBNER, Otto, 88048 Friedrichshafen (DE); SCHWEIGER, Klaus, 88046 Friedrichshafen (DE); RÜCHARDT, Christoph, 88131 Bodolz (DE); GANSOHR, Marcus, 88682 Salem (DE)
(86) Internationale Anmeldenummer: PCT/EP2003/012479
(87) Internationale Veröffentlichungsnummer: WO 2004/046573

(56) Entgegenhaltungen:
- EP-A- 0 984 185
- DE-A- 2 129 292
- DE-A- 19 953 093

## Beschreibung

Die Erfindung betrifft eine Einrichtung zur Herstellung der Betriebsbereitschaft einer hydraulischen Betätigungsvorrichtung, insbesondere für eine Kupplung eines Kraftfahrzeuges, gemäß Oberbegriff des Patentanspruchs 1.

Derartige Einrichtungen werden regelmäßig dann eingesetzt, wenn der Verschleiß von Kupplungsbauteilen, insbesondere der des Kupplungsreibbelages, zu Veränderungen im System führt, die jedoch keinen Einfluss auf das Betätigungsverhalten der Kupplung haben sollen.

So ist aus der DE 199 53 093 A1 bekannt, ein Geber-Nehmer-System in die Kupplungsbetätigung zu integrieren, das im wesentlichen aus einem Geberkolben, einem Nehmerkolben und einem, den Geberkolben und Nehmerkolben aufnehmenden Zylinder besteht, in dem Geberkolben und Nehmerkolben axial relativ zueinander verschiebbar sind.

Über die relative Verschiebbarkeit von Geberkolben und Nehmerkolben und die damit verbundene Volumenanpassung in Abhängigkeit vom Verschleißverhalten der Kupplungsbauteile kann ein weitgehend übereinstimmendes Ansprechverhalten der Kupplung über einen längeren Betriebszeitraum erreicht werden. Ein Hinweis auf ein Verfahren zum effizienten Befüllen des Geber-Nehmer-Systems einer Kupplungsbetätigung ist dieser Schrift jedoch nicht zu entnehmen.

Aus der EP-A-0 984 185 schließlich ist eine Einrichtung zur Herstellung der Betriebsbereitschaft einer hydraulischen Betätigungsvorrichtung, insbesondere für eine Kupplung eines Kraftfahrzeuges, bekannt, mit einem im hydraulischen Übertragungsweg der Betätigungsvorrichtung befindlichen Geber-Nehmer-System, das zwei in Abhängigkeit vom angestrebten Betriebsverhalten der Betätigungsvorrichtung in ihrer Relativlage zueinander veränderbare Kolben enthält, mit einer Hydraulikversorgung sowie mit einer Fluid-Zuführeinheit zu dem Geber-Nehmer-System, wobei die Fluid-Zuführeinheit ein zur Freigabe eines Volumenstromes dienendes Ventil enthält, auf das eine Ventil-Steuereinrichtung einwirkt, die derart aufgebaut ist, dass der von der Fluid-Zuführeinheit freigegebene Volumenstrom des in das Geber-Nehmer-System einströmenden Fluids einen Grenzvolumenstrom nicht übersteigt.

Der Erfindung liegt die Aufgabe zugrunde, eine hydraulische Betätigungsvorrichtung derart weiter zu entwickeln, dass der Volumenstrom einfacher und sicherer zu steuern ist.

Erfindungsgemäß enthält bei einer Einrichtung gemäß Oberbegriff des Patentanspruchs 1 die Fluid-Zuführeinheit mindestens ein zur Freigabe eines im wesentlichen konstanten Volumenstromes dienendes Taktventil, auf das eine Taktventil-Steuereinrichtung einwirkt, die derart aufgebaut ist, dass der von der Fluid-Zuführeinheit freigegebene Volumenstrom des in das Geber-Nehmer-System einströmenden Fluids einen Grenzvolumenstrom nicht übersteigt.

Die Erfindung ist mit dem Vorteil verbunden, dass das Geber-Nehmer-System einer hydraulischen Betätigungsvorrichtung über robuste, preiswerte und funktionssichere Taktventile und durch Steuerung mit einer kostengünstig zu realisierenden Steuerungseinrichtung mit dem Fluid befüllbar ist. Unterschiedliche Strömungsverhältnisse und verschiedene Bauarten von Geber-Nehmer-Systemen können bei der Einstellung des Grenzvolumenstromes Berücksichtigung finden.

Die als Geberkolben und Nehmerkolben ausgeführten Kolben des Geber-Nehmer-Systems sind in einem Zylinder axial und relativ zueinander verschiebbar und definieren gemeinsam mit der Innenwand des Zylinders einen Befüllraum, in dessen Begrenzung eine Befüllöffnung für das von der Fluid-Zuführeinheit bereitgestellte Fluid angeordnet ist.

Eine weitere Grundüberlegung der Erfindung besteht darin, den Druckverlust eines mit konstantem Volumenstrom durchflossenen Taktventils als Parameter für einen definierten Druckabfall an dem betreffenden Ventil in der Taktventil-Steuereinrichtung zu verarbeiten. Von der Druckeinstelleinheit kann daher der Druckabfall an einem oder mehreren Ventilen in die Berechnung des bereitzustellenden Referenzdruckes einfließen.

Zu der Fluid-Zuführeinheit besteht eine hydraulische Verzweigung, in der sich mindestens ein weiteres Taktventil befindet. Über die Anzahl und die Anordnung der Taktventile wird das Druckpotenzial an Verzweigungspunkt bestimmt, so dass in Abhängigkeit von der gewählten Konfiguration ein Grenzvolumenstrom zu dem Geber-Nehmer-System nicht überschritten wird.

Dabei ist es von Vorteil, dass die Auswahl von Taktventilen zur Einstellung eines definierten Strömungswiderstandes von der Taktventil-Steuereinrichtung hinsichtlich Art und Verknüpfung der betreffenden Ventile erfolgt.

Einer der Kolben kann mindestens eine Ausnehmung, vorzugsweise eine Ausgleichsbohrung, aufweisen, die einen Fluidtransport in den Zwischenraum zwischen den Kolbenflächen von Geberkolben und Nehmerkolben ermöglicht.

Die Taktventil-Steuereinrichtung umfasst in bevorzugter Ausführung der Erfindung ein Steuerelement, das den Volumenstrom im Bereich der Befüllöffnung auf einem Niveau hält, bei dem eine Volumenkonstanz des Befüllraumes gewährleistet ist.

Die Befüllöffnung des Befüllraumes kann dabei derart angeordnet sein, dass diese durch Axialverschiebung eines der beiden Kolben verschließbar ist, wobei das Steuerelement der Taktventil-Steuereinrichtung den Volumenstrom zum Befüllraum dahingehend begrenzt, dass der Kolben in einer Position verbleibt, in der die Befüllöffnung des Befüllraumes fluiddurchflossen ist.

In weiterer Ausgestaltung der Erfindung weist die Taktventil-Steuereinrichtung einen Datenspeicher auf, in dem Parameter zum Strömungswiderstand mindestens eines Taktventils abgelegt sind, die in die Berechnung des maximal zulässigen Volumenstromes zur Befüllung des Geber-Nehmer-Systems eingehen.

Die Steuereinrichtung kann zweckmäßigerweise zur Beeinflussung des von der Hydraulikversorgung gelieferten Versorgungsdruckes eine Druckeinstelleinheit aktivieren, von der ein für die Befüllung des Zwischenraumes zwischen Geberkolben und Nehmerkolben geeigneter Referenzdruck festgelegt wird.

In Weiterführung der Erfindung besteht auch die Möglichkeit, dass die Steuereinrichtung zur Beeinflussung des von der Hydraulikversorgung bereitgestellten Volumenstromes mit einer Volumenstrom-Regeleinrichtung zusammenwirkt, von der ein für die Befüllung des Geber-Nehmer-Systems geeigneter Volumenstrom bestimmt wird.

Die Erfindung soll nachfolgend anhand eines Ausführungsbeispiels mit zugehörigen Zeichnungen näher erläutert werden.

Es zeigen
- Fig. 1: eine schematische Darstellung einer Kupplungsbetätigung,
- Fig. 2: einen Ausrückzylinder eine Kupplungsbetätigung gemäß Fig. 1 mit Geber- und Nehmerkolben und
- Fig. 3: eine Anordnung zum Befüllen eines Geber-Nehmer-Systems einer Kupplungsbetätigung gemäß Fig. 2.

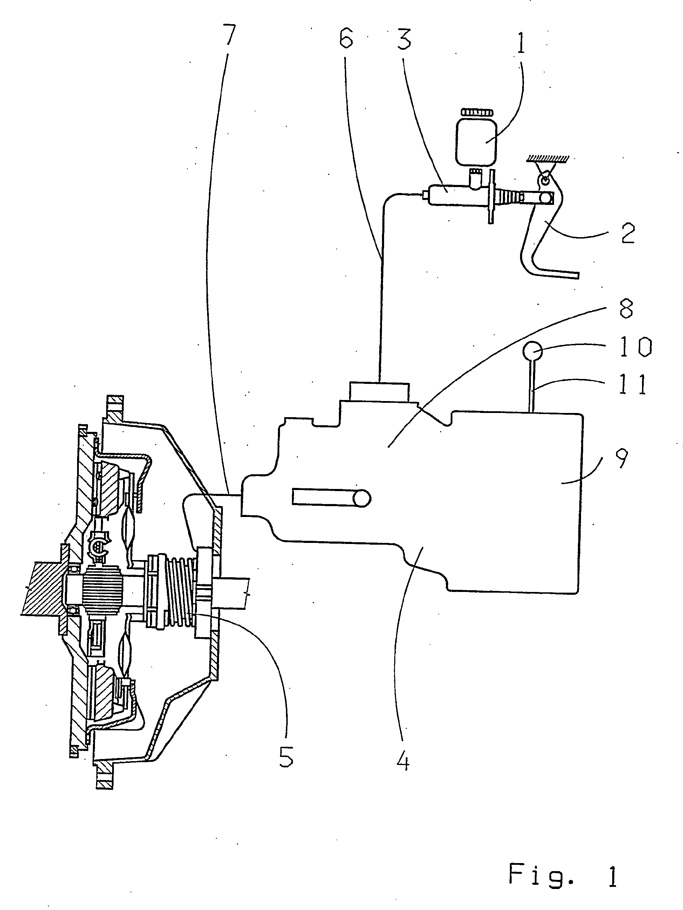

Eine hydraulische Kupplungsbetätigung, die gemäß Fig. 1 mit einem pneumatischen Verstärker versehen sein kann, besteht im wesentlichen aus einem, mit einem Ausgleichsbehälter 1 versehenen und vom Kupplungspedal 2 betätigten Betätigungszylinder 3, einem dem Betätigungszylinder 3 nachgeordneten Druckverstärker 4, einem auf den Ausrückmechanismus der Kupplung wirkenden, als Geber-Nehmer-System ausgebildeten Ausrückzylinder 5 und aus Hydraulikleitungen 6 und 7, die eine flüssigkeitsdichte Verbindung zwischen Betätigungszylinder 3 und Druckverstärker 4 sowie zwischen Druckverstärker 4 und Ausrückzylinder 5 herstellen.

Der Druckverstärker 4 weist einen auf den Hydraulikbereich 8 und die angrenzenden Hydraulikleitungen 6,7 wirkenden Pneumatikbereich 9 auf, der im aktiven Zustand mit einem komprimierten Gas beaufschlagt ist, das von einem Verdichter 10 über eine Pneumatikleitung 11 bereitgestellt wird.

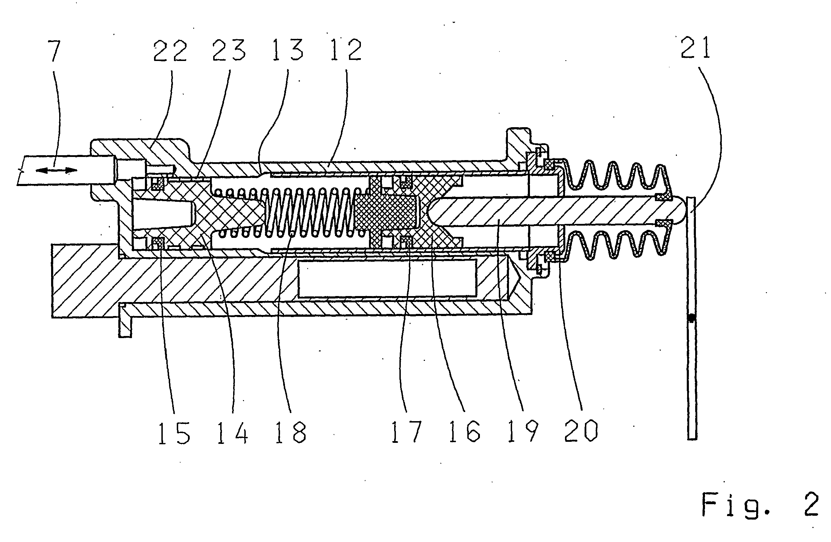

Der hier in seinem konstruktiven Aufbau beispielhaft dargestellte Ausrückzylinder 5 ist in Fig. 2 im nicht angesteuerten Zustand dargestellt. Das im wesentlichen zylinderförmig ausgebildete Gehäuse 12 ist mit einer Stufenbohrung 13 versehen, in der ein Geberkolben 14 mit einem Dichtring 15 und ein Nehmerkolben 16 mit einem Dichtring 17 axial verschiebbar angeordnet sind. Eine Beabstandung zwischen Geberkolben 14 und Nehmerkolben 16 und damit die konstruktive Möglichkeit zur Schaffung eines Freiraumes für einen automatischen Verschleißausgleich von Teilen der Kupplung wird durch eine Schraubenfeder 18 erreicht, die die Annäherung des Nehmerkolbens 16 an den Geberkolben 14 bei Druckentlastung des Geberkolbens 14 begrenzt.

Der Nehmerkolben 16 wirkt auf eine Kolbenstange 19, die in einer Ausnehmung der Stirnplatte 20 geführt ist und sich zum Ausrückhebel 21 der Kupplungsbetätigung erstreckt. Zum Schutz der Kolbenstange 19 ist diese von einem Faltenbalg umschlossen, der mit dem Endbereich größeren Durchmessers auf der Stirnplatte 20 des Gehäuses 12 sitzt.

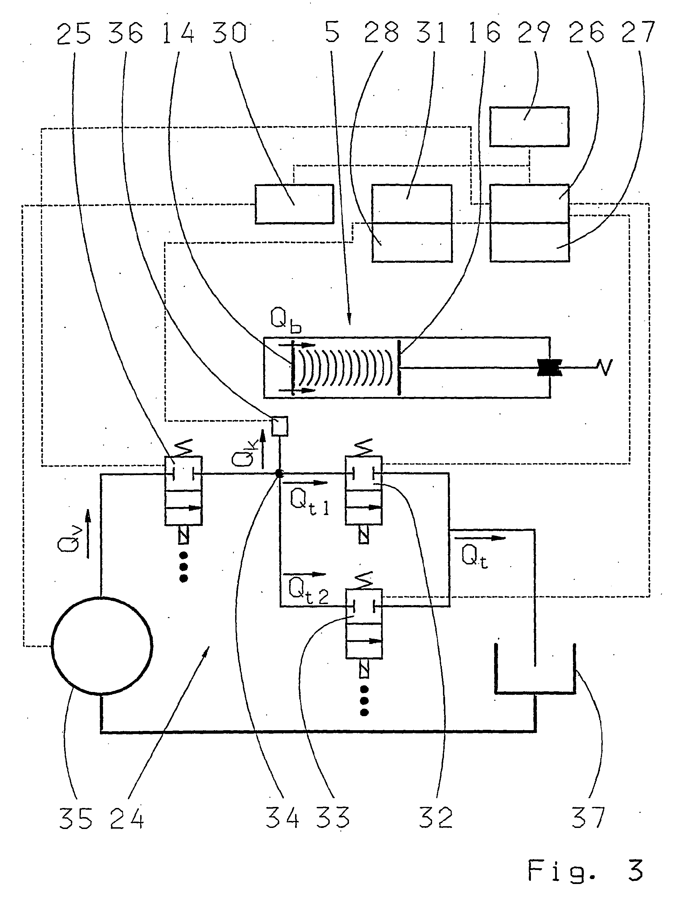

An dem der Kolbenstange 19 abgewandten Ende des Gehäuses 12 ist die Hydraulikleitung 7 flüssigkeitsdicht mit dem Anschlussbereich 22 des Gehäuses 12 verbunden. Eine im Anschlussbereich 22 vorgesehene Ausgleichsbohrung 23 stellt bei endseitigem Anschlag des Geberkolbens 14 eine Verbindung der Hydraulikleitung 7 mit dem Raum zwischen Geberkolben 14 und Nehmerkolben 16 her, so dass Flüssigkeit mit einem Volumenstrom Q_{K} von einer in Fig. 3 dargestellten Fluid-Zuführeinheit 24 über die Hydraulikleitung 7 in diesen Raum geleitet werden kann.

Die Fluid-Zuführeinheit 24 enthält eine Druckmittelpumpe 35, die ein Versorgungsventil 25 mit einem Versorgungsvolumenstrom Q_{V} speist. Dieses Versorgungsventil 25 ist als Taktventil ausgebildet und stellt im geöffneten Zustand einen im wesentlichen konstanten Volumenstrom Q_{K} zur Speisung der Ausgleichsbohrung 23 bereit. Zur Steuerung des Versorgungsventils 25 hinsichtlich seines Öffnungs- oder Schließzustandes ist dieses über eine hier gestrichelt dargestellte Steuerungsleitung mit einer Taktventil-Steuereinrichtung 26 verbunden.

Der Taktventil-Steuereinrichtung 26 ist ein Steuerelement 27 zugeordnet, das auf einen Volumenstrombegrenzer 28 derart wirkt, dass der Geberkolben 14 während des Befüllens des zwischen dem Geberkolben 14 und dem Nehmerkolben 16 eingeschlossenen Raumes seine Ausgangslage nicht verlässt und die Flüssigkeit durch die Ausgleichsbohrung 23 in diesen Raum ungehindert fließen kann. Nach Abschluss des Befüllvorganges wird das Versorgungsventil 25 geschlossen.

Zur Erfassung des Volumenstromes kann in einer Weiterbildung der Erfindung in der Zuführleitung 7 ein geeigneter Sensor 36 angeordnet sein, der über eine gestrichelt dargestellte Sensorleitung mit dem Steuerungsgerät verbunden ist.

Mit der Taktventil-Steuereinrichtung 26 kann zudem ein Datenspeicher 29 verbunden sein, in dem der vorzugsweise hohe Strömungswiderstand des Versorgungsventils 25 erfasst und einer Druckeinstelleinheit 30 zur Verfügung gestellt wird, so dass der Strömungswiderstand des Versorgungsventils 25 als Steuerungsparameter für den durch die Pumpe 35 bereitzustellenden Versorgungsvolumenstrom Q_{V} Verwendung findet. Zur Steuerung der Pumpe 35 ist diese über eine gestrichelt dargestellte Steuerungsleitung mit der Druckstelleinheit 30 verbunden.

Darüber hinaus steht das Steuerelement 27 mit einer Volumenstrom-Regeleinrichtung 31 in Verbindung, mit deren Hilfe ein geeigneter Fluiddurchsatz in der Zuführleitung 7 realisiert wird. Dazu sind strömungstechnisch hinter dem Versorgungsventil 25 im Anschluss an einen Leitungsverzweigungspunkt 34 Abgleichtaktventile 32, 33 angeordnet, die jeweils im geöffneten Zustand ein Abfließen des von dem Versorgungsventil 25 durchgelassenen Fluids in Richtung zu einem Auffangtank 37 ermöglichen.

Durch gezielte Auswahl der Strömungswiderstände des Versorgungsventils 25 und der Abgleichventile 32, 33 kann in Abhängigkeit vom Versorgungsdruck der Druckquelle und dem Öffnungszustand der beiden Taktventile 32, 33 ein Druckpotenzial am Verzweigungspunkt 34 eingestellt werden, dass zu einem Fluid-Volumenstrom führt, der ein effizientes Befüllen des Raumes zwischen Geberkolben 14 und Nehmerkolben 16 ermöglicht.

### Bezugszeichen

- 1: Ausgleichsbehälter
- 2: Kupplungspedal
- 3: Betätigungszylinder
- 4: Druckverstärker
- 5: Ausrückzylinder
- 6: Hydraulikleitung
- 7: Hydraulikleitung
- 8: Hydraulikbereich
- 9: Pneumatikbereich
- 10: Verdichter
- 11: Pneumatikleitung
- 12: Gehäuse
- 13: Stufenbohrung
- 14: Geberkolben
- 15: Dichtring
- 16: Nehmerkolben
- 17: Dichtring
- 18: Schraubenfeder
- 19: Kolbenstange
- 20: Stirnplatte
- 21: Ausrückhebel
- 22: Anschlussbereich
- 23: Ausgleichsbohrung
- 24: Fluid-Zuführeinheit
- 25: Versorgungsventil
- 26: Taktventil-Steuereinrichtung
- 27: Steuerelement
- 28: Volumenstrombegrenzer
- 29: Datenspeicher
- 30: Druckeinstelleinheit
- 31: Volumenstrom-Regeleinrichtung
- 32: Abgleichventil
- 33: Abgleichventil
- 34: Leitungsverzweigungspunkt
- 35: Fluidpumpe
- 36: Sensor
- 37: Tank

## Patentansprüche

1. Einrichtung zur Herstellung der Betriebsbereitschaft einer hydraulischen Betätigungsvorrichtung, insbesondere für eine Kupplung eines Kraftfahrzeuges, mit einem im hydraulischen Übertragungsweg der Betätigungsvorrichtung befindlichen Geber-Nehmer-System (5), das zwei in Abhängigkeit vom angestrebten Betriebsverhalten der Betätigungsvorrichtung in ihrer Relativlage zueinander veränderbare Kolben (14, 16) enthält, die als Geberkolben (14) und Nehmerkolben (16) des Geber-Nehmer-Systems (5) in einem Zylinder axial und relativ zueinander verschiebbar sind und gemeinsam mit der Innenwand eines Zylinders einen Befüllraum definieren, in dessen Begrenzung eine Befüllöffnung (23) für ein Fluid angeordnet ist mit einer Hydraulikversorgung sowie mit einer Fluid-Zuführeinheit (24) zu dem Geber-Nehmer-System (5), die mindestens ein zur Freigabe eines im wesentlichen konstanten Volumenstromes dienendes Ventil (25) enthält, auf das eine Steuereinrichtung (26) einwirkt, die derart aufgebaut ist, dass der von der Fluid-Zuführeinheit (24) freigegebene Volumenstrom des in das Geber-Nehmer-System (5) einströmenden Fluids einen Grenzvolumenstrom Q_{K} nicht übersteigt, **dadurch gekennzeichnet, dass** das Ventil (25) ein von der Steuereinrichtung (26) getaktet angesteuertes Ventil ist und der Druckverlust des mit einem konstanten Volumenstrom durchflossenen Taktventils (25) als Parameter für einen definierten Druckabfall an diesem Ventil in der Taktventil-Steuereinrichtung (26) verarbeitet wird, wobei in der Fluid-Zuführeinheit (24) eine hydraulische Leitungsverzweigung (34) besteht, an der mindestens ein weiteres Taktventil (32, 33) strömungstechnisch angeschlossen ist und die Taktventil-Steuereinrichtung (26) hinsichtlich der Art und der Verknüpfung der Taktventile (25, 32, 33) eine Auswahl zur Einstellung eines definierten Strömungswiderstandes trifft, die zu einem Volumenstrom führt, der den zur Befüllöffnung (23) des Befüllraumes gerichteten Grenzvolumenstrom Q_{K} nicht übersteigt, wobei die strömungstechnisch hinter dem Versorgungsventil (25) im Anschluss an den Leitungsverzweigungspunkt (34) angeordneten Abgleichtaktventile (32, 33) jeweils im geöffneten Zustand ein Abfließen des von dem Versorgungsventil (25) duchgelassenen Fluids in Richtung zu einem Auffangtank (37) ermöglichen.

2. Einrichtung nach Anspruch 1, **dadurch gekennzeichnet, dass** die Taktventil-Steuereinrichtung (26) ein Steuerelement (27) umfasst, das den Volumenstrom im Bereich der Befüllöffnung (23) auf einem Niveau hält, bei dem die Volumenkonstanz des Befüllraumes gewährleistet ist.

3. Einrichtung nach Anspruch 2, **dadurch gekennzeichnet, dass** das Steuerelement (27) zur Beeinflussung des von der Hydraulikversorgung gelieferten Versorgungsdruckes eine Druckeinstelleinheit (30) aktiviert, von der ein für die Befüllung des Zwischenraumes zwischen Geberkolben (14) und Nehmerkolben (16) geeigneter Referenzdruck festgelegt wird.

4. Einrichtung nach Anspruch 1, **dadurch gekennzeichnet, dass** einer der Kolben (14) mindestens eine Ausnehmung (23) aufweist, die einen Fluidtransport in den Zwischenraum zwischen den Kolbenflächen von Geberkolben (14) und Nehmerkolben (16) ermöglicht.

5. Einrichtung nach Anspruch 1, **dadurch gekennzeichnet, dass** das Steuerelement (27) zur Beeinflussung des von der Hydraulikversorgung bereitgestellten Volumenstromes mit einer Volumenstrom-Regeleinrichtung (31) zusammenwirkt, von der ein für die Befüllung des Geber-Nehmer-Systems (5) geeigneter Volumenstrom bestimmt wird.

6. Einrichtung nach einem der Ansprüche 1 bis 5, **dadurch gekennzeichnet, dass** die Taktventil-Steuereinrichtung (26) einen Datenspeicher (29) aufweist, in dem Parameter zum Strömungswiderstand mindestens des Taktventils (25) abgelegt sind oder werden, die in die Berechnung des maximal zulässigen Volumenstromes zur Befüllung des Geber-Nehmer-Systems (5) eingehen.

## Claims

1. The invention relates to an installation for the establishment of the operational readiness of a hydraulic control device, in particular for a clutch of a motor vehicle, with the hydraulic transmission path of the control device containing a master/slave system (5) and the latter containing two pistons (14, 16) whose relative position in relation to each other is variable depending on the intended operational behavior of the control device and which, as master piston (14) and slave piston (16) of the master/slave system (5), are arranged in a cylinder, where they are axially displaceable relative to each other and, together with the inner wall of a cylinder, define a filling space, in the wall of which a filling orifice (23) for a fluid is arranged; with a hydraulic supply system as well as a fluid feed unit (24) for the master/slave system (5) being provided and containing at least one valve (25) for the release of a largely constant volume flow, with this valve being controlled by a control device (26) which is designed in such a way that the volume flow of the fluid released by the fluid feed unit (24) and flowing into the master/slave system (5) does not exceed a limit volume flow Qₖ,
**characterized in that** the valve (25) is cyclically controlled by the control unit (26) and the pressure loss of the pulse valve (25), through which a constant volume flows, is processed in the pulse valve control device (26) as a parameter for a defined pressure drop on this valve, with the fluid feed unit (24) containing a hydraulic line branching (34) to which at least one further pulse valve (32, 33) is connected for fluid engineering, and with the pulse valve control unit (26) selecting a defined coefficient of drag depending on type and connection of the pulse valves (25, 32, 33), which results in a volume flow which does not exceed the limit volume flow Qₖ specified for the filling orifice (23) of the filling space, with the pulse valves (32, 33), which for fluid-engineering purposes are arranged after the supply valve (25) and the line branching point (34), in their open condition permitting the fluid passing through the supply valve (25) to flow towards a drain tank (37).

2. An installation according to claim 1, **characterized in that** the pulse valve control unit (26) comprises a control element (27) which maintains the volume flow in the area of the filling orifice (23) at a level which ensures a constant volume in the filling space.

3. An installation according to claim 2, **characterized in that** the control element (27) influencing the feed pressure provided by the hydraulic supply system activates a pressure-adjusting unit (30) which determines a reference pressure suited for filling the intermediate space between master piston (14) and slave piston (16).

4. An installation according to claim 1, **characterized in that** one of the pistons (14) features at least one recess (23) which permits fluid transportation to the intermediate space between the piston surfaces of master piston (14) and slave piston (16).

5. An installation according to claim 1, **characterized in that** the control element (27) influencing the volume flow provided by the hydraulic supply system interacts with a volume-flow control device (31) which determines a volume flow suited for filling the master/slave system (5).

6. An installation according to one of the claims 1 through 5, **characterized in that** the pulse valve control device (26) features a memory (29) in which parameters regarding the coefficient of drag of at least the pulse valve (25) have been or are stored and are used to calculate the maximally permitted volume flow for filling the master/slave system (5).

## Revendications

1. Dispositif pour la mise en ordre de marche d'un dispositif d'actionnement hydraulique, en particulier pour un embrayage de véhicule automobile, comprenant un système émetteur-récepteur (5) intercalé dans la voie de transmission hydraulique du dispositif d'actionnement, et qui renferme deux pistons (14, 16) qui varient en position relative en fonction du comportement de travail du dispositif d'actionnement que l'on cherche à obtenir et qui, constituant le piston émetteur (14) et le piston récepteur (16) du système émetteur-récepteur (5), peuvent se déplacer axialement et l'un par rapport à l'autre dans un cylindre et définissent en commun avec la paroi intérieure d'un cylindre une chambre de remplissage dans les limites de laquelle est prévu un orifice de remplissage (23) pour un fluide, et comprenant une alimentation hydraulique ainsi qu'une unité (24) d'amenée de fluide pour le système émetteur-récepteur (5), unité qui comprend au moins une soupape (25) qui sert à libérer un débit volumique sensiblement constant, et sur laquelle agit un dispositif de commande (26) qui est constitué de manière que le débit volumique du fluide libéré par l'unité d'amenée de fluide (24) et entrant dans le système émetteur-récepteur (5) n'excède pas un débit volumique limite Q_{K}, **caractérisé en ce que** la soupape (25) est une soupape commandée en pilotage cadencé par le dispositif de commande (26) et que la perte de charge de la soupape cadencée (25) qui est traversée par un débit volumique constant est analysée comme paramètre pour une chute de pression définie sur cette soupape dans le dispositif de commande (26) de soupape cadencée, cependant que, dans l'unité d'amenée de fluide (24), est prévue une ramification de conduite hydraulique (34) à laquelle au moins une autre soupape cadencée (32, 33) est raccordée en technique d'écoulement et le dispositif de commande (26) de soupape cadencée, pour tenir compte du type et de la combinaison des soupapes cadencées (25, 32, 33), effectue une sélection pour le réglage d'une résistance à l'écoulement définie, qui a pour résultat un débit volumique qui n'excède pas le débit volumique limite Q_{K} qui est envoyé à l'orifice de remplissage (23) de la chambre de remplissage, les soupapes cadencées d'équilibrage (32, 33) qui sont placées, en technique d'écoulement, en aval de la soupape d'alimentation (25) dans le raccordement au point de ramification de conduite (34) permettant, à l'état ouvert, au fluide qui a traversé la soupape d'alimentation (25) de se décharger vers un réservoir collecteur (37).

2. Dispositif selon la revendication 1, **caractérisé en ce que** le dispositif de commande (26) de soupape cadencée comprend un élément de commande (27) qui maintient le débit volumique dans la région de l'ouverture de remplissage (23) à un niveau auquel la constance du volume de la chambre de remplissage est assurée.

3. Dispositif selon la revendication 2, **caractérisé en ce que** l'élément de commande (27) destiné à agir sur la pression d'alimentation fournie par l'alimentation hydraulique, active une unité (30) de réglage de la pression qui fixe une pression de référence appropriée pour le remplissage de l'espace intermédiaire compris entre le piston émetteur (14) et le piston récepteur (16).

4. Dispositif selon la revendication 1, **caractérisé en ce qu'**un des pistons (14) comporte au moins un évidement (23) qui permet un transport de fluide débouchant dans l'espace intermédiaire compris entre les surfaces du piston émetteur (14) et du piston récepteur (16).

5. Dispositif selon la revendication 1, **caractérisé en ce que** l'élément de commande (27) destiné à agir sur le débit volumique préparé par l'alimentation hydraulique coopère avec un dispositif (31) du réglage du débit volumique qui détermine un débit volumique approprié pour le remplissage du système émetteur-récepteur (5).

6. Dispositif selon l'une des revendications 1 à 5, **caractérisé en ce que** le dispositif de commande (26) de soupape cadencée comporte une mémoire de données (29) dans laquelle sont préalablement ou actuellement enregistrés des paramètres, au moins pour la résistance à l'écoulement de la soupape cadencée (25), qui entrent dans le calcul du débit volumique maximum admissible pour le remplissage du système émetteur-récepteur (5).
